Europäisches Patentamt

**European Patent Office**

Office européen des brevets

(11) Publication number: **0 005 377**
**A1**

(12) **EUROPEAN PATENT APPLICATION**

(21) Application number: **79300787.3**

(22) Date of filing: **08.05.79**

(51) Int. Cl.²: **A 61 C 1/07, H 03 B 3/04**

(30) Priority: 08.05.78 US 903888

(43) Date of publication of application: **14.11.79**
**Bulletin 79/23**

(84) Designated Contracting States: **DE FR GB IT**

(71) Applicant: **LITTON INDUSTRIAL PRODUCTS INC., 360 North Crescent Drive, Beverly Hills California 90210 (US)**

(72) Inventor: **Cranston, Dale O., Rt. 2, Lawrence Kansas (US)**

(74) Representative: **Godsill, John Kenneth et al, Haseltine Lake & CO. Hazlitt House 28 Southampton Buildings Chancery Lane, London WC2A 1AT (GB)**

(54) Dental handpiece and oscillating circuit for driving a transducer assembly.

㊵ A dental handpiece is disclosed with a transducer assembly for holding a work tool which is caused to vibrate at substantially a resonant frequency by a variable frequency oscillator (20). The oscillator (20) sweeps through a spectrum of frequencies under control of oscillator control means (24). A maximum in the current flow through the transducer assembly occurs at a resonant frequency and is detected by maximum detecting means (22) which then generates a latch signal to stop the oscillator at substantially that resonant frequency. Hence the oscillator is correlated to the resonant frequency of the assembly, and subsequent changes in the loading conditions on the assembly do not affect the oscillator frequency.

ACTORUM AG

1

DENTAL HANDPIECE

The present invention relates to a dental handpiece wherein a dental work tool held by a transducer assembly is caused to vibrate by application of an electrical signal from a variable frequency oscillator. The frequency of vibration of the tool is controlled by oscillator control means.

As is known such dental handpieces work most efficiently, i.e. maximum vibration amplitude is obtained, when the vibration frequency is at the resonant frequency of the handpiece. Therefore in order to obtain the optimum amplitude of vibration, the frequency of the electrical oscillations within the transducer assembly must be correlated to the natural frequency of vibration of the mechanical portion of the system, i.e. of the handpiece.

Known ways of effecting such correlation include that described in U.S. Patent No 2897578 which provides for the adjustment of the frequency of the oscillator either manually by an operator, or automatically under the control of a feedback signal which varies with the impedance of the transducer assembly, or in accordance with a feedback signal obtained from a pickup such as a piezo-electric crystal which is coupled to the vibrating dental work tool. Another way is described in U.S. Patent No 3629726 which discloses an oscillator and an

2     0005377

oscillator control means wherein a feedback voltage corresponding to the difference between the current through the transducer and the voltage across the transducer is utilised. The oscillator control means receives feedback signals which are representative of both the voltage across and the current through the transducer driving coil and the two feedback signals are combined vectorially to lock the oscillator frequency to the resonant frequency of the transducer.

These known systems continually compensate for oscillator frequency shifts and changes in the loading of the transducer assembly, for example as occurs when the dental work tool is applied to a tooth, and can consequently cause damage to teeth being treated by exerting excessive pressure. Additional circuits are therefore often used to limit the current supplied to the transducer under loaded conditions.

According to the present there is provided a dental handpiece wherein the oscillator control means is arranged to sweep the oscillator through a spectrum of frequencies and wherein there is provided means for detecting a maximum in the current flow in the transducer assembly as the oscillator sweeps to generate a latch signal stopping the oscillator at substantially the frequency producing the detected maximum current flow through the transducer assembly. This frequency is substantially a resonant frequency of the assembly.

It can be seen that a dental handpiece according to the present invention automatically finds the natural frequency of vibration of a transducer assembly holding a dental work tool, and locks the oscillator onto that frequency.

A handpiece according to the present invention is particularly advantageous because retuning occurs each time the handpiece is used. This compensates for variations in the mechanical characteristics of the vibrating assembly and the dental tool, for example those which develop with use of the handpiece, or which exist for different tools. The handpiece may therefore be used with a wide variety of dental tools having very different resonant frequencies.

A dental handpiece according to the present invention can be constructed to avoid the need for additional current limiting circuits. By virtue of the latch signal subsequent changes in the loading conditions on the transducer assembly do not affect the oscillator frequency.

One embodiment of the present invention will now be described in detail below with reference to the accompanying drawings, in which:-

FIGURE 1 is a schematic representation of an electrical circuit for driving a transducer assembly of a dental handpiece according to the present invention;

FIGURE 2 is a graph showing the relationship between the current flow through and the oscillator frequency applied to the transducer assembly of a dental handpiece according to the present invention.

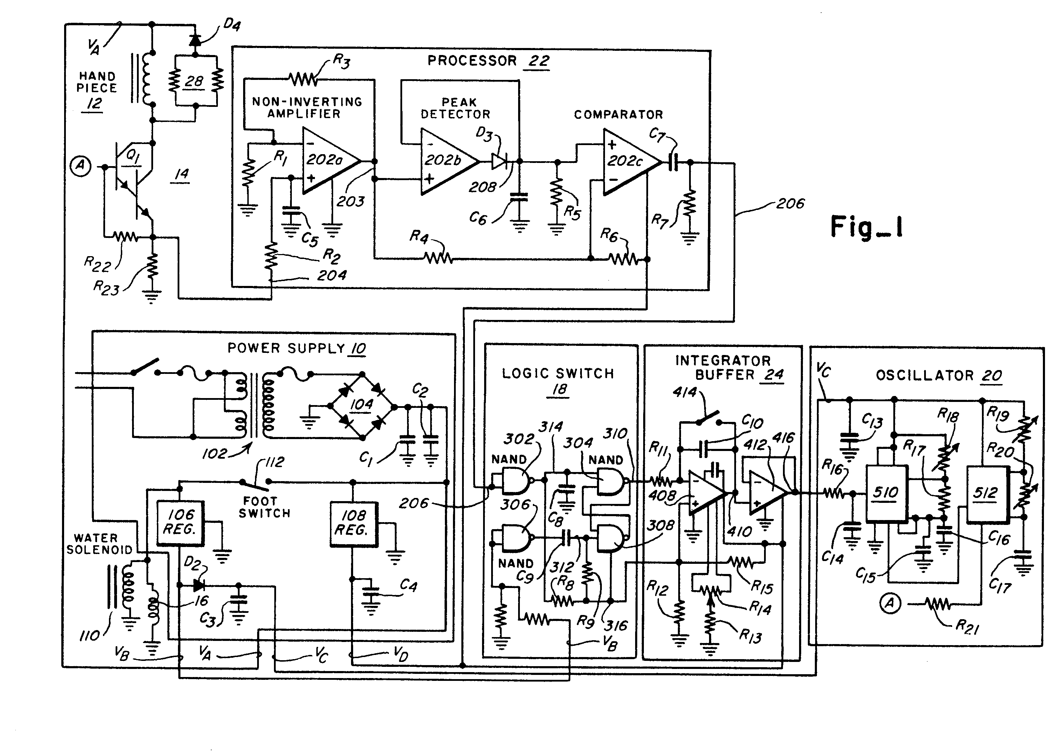

Figure 1 is a schematic representation of an electrical circuit for driving a transducer assembly of a dental handpiece according to the invention at essentially a resonant frequency of the transducer assembly. The circuit is generally shown to comprise a variable frequency oscillator 20 which operates through an output amplifier 14 to produce an alternating signal in a driving coil 12 of the handpiece. The frequency of the oscillator 20 is controlled by a control signal produced by oscillator control means in the form of an integrator buffer 24, as described in more detail below.

The system cycle is initiated with the activation by the dentist of a foot switch 112 associated with the power supply 10. A voltage $V_b$ sets a logic switch 19 to

produce a "start" signal 310. The integrator buffer 24 is responsive to the "start" signal 310, to produce a generally ramp-shaped control signal 416 which sweeps the oscillator 20 through a plurality of frequencies. A processor 22 monitors the current flow through the coil 12 to produce a "stop" signal when the oscillator is sweeping through the resonant frequency. The "stop" signal resets the logic switch 18 to hold the buffer 24 at the appropriate control signal value.

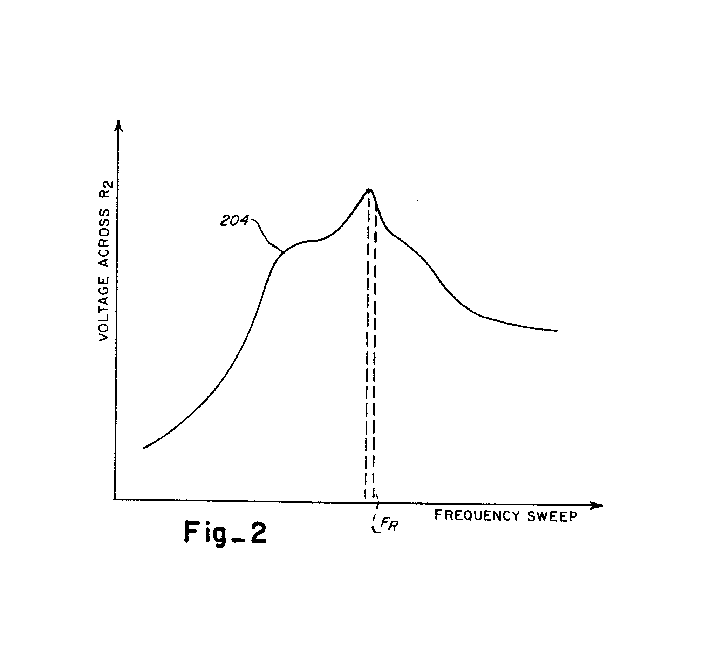

Figure 2 is a graph showing, by line 204, the relationship between the coil 12 current and the oscillator frequency. It can be seen that the voltage across sensing resistor $R_2$, and therefore the current through the coil 12, increases to a maximum value at a resonant frequency $F_R$ and then decreases as the frequency is varied past the resonant frequency. The processor 22 is responsive to the reversal in the direction of flow of the current through the coil 12 which occurs as the oscillator sweeps through the resonant frequency $F_R$.

The circuitry of Figure 1 will now be described in more detail. Oscillator 20 is a monolithic timing circuit comprising two separate timers 510 and 512 which operate in an astable mode. The timer 510 functions as the basic oscillator and has a frequency which is determined by the values of resistors R17 and R18 and capacitors C15 and C16. The timer 510 includes a VCO (Voltage Controlled Oscillator) input terminal which is connected to capacitor C14 and resistor R16. The value of resistor R16 determines the operating frequency range of the VCO system. Capacitors C14 and C13 bypass high frequency noise. The output of timer 510 is fed to timer 512 which forms another astable oscillator, with resistors R19 and R20 and capacitor C17 determining the duty cycle of the output signal delivered through resistor R21 to an output amplifier 14. In this disclosed embodiment, the oscillator 20 provides an astable VCO oscillator frequency having a variable duty cycle. The timer 512 may also be a monostable multivibrator triggered by astable oscillator 510.

The output amplifier 14 preferably comprises a Darlington pair of transistors Q1. The variable duty cycle waveform from oscillator 20 is applied to the base of the Darlington pair Q1 causing it to saturate and draw current through the handpiece coil 12. A damping resistor 28 and a diode D4 are coupled in parallel with the handpiece coil in the collector circuit of the Darlington pair Q1. A resistor R23, located in the emitter circuit of the Darlington pair Q1 produces a voltage 204 which is representative of the current flow through the handpiece coil 12. Processor 22 senses this voltage 204.

The processor 22 comprises a non-inverting amplifier 202a, a peak detector 202b and a comparator 202c. Voltage 204 is initially a composite AC and DC voltage and is filtered by capacitor C5. The remaining average DC voltage is applied to the non-inverting input of amplifier 202a. The gain of amplifier 202a is determined by the values of resistors R1 and R3, as known in the art. Amplified DC voltage 203 is applied to an input of the peak detector 202b and, simultaneously, to the inverting input terminal of the comparator 202c via a resistor R4.

The peak detector 202b operates as an ideal diode with a capacitor C6 storing a DC voltage which increases until it is equal to the peak value of the voltage 203. This maximum value is applied to the non-inverting input of the comparator 202c whose inverting input is supplied with the instantaneous value of the voltage 203 as indicated above. A small positive voltage from the resistor R6 provides a turn-on threshold for the comparator 202c. As the oscillator 20 sweeps towards the resonant frequency of the transducer assembly both the inverting and non-inverting comparator inputs will follow the rising value of the signal 203 as the coil current increases.  The magnitude of the coil current reaches a peak at the transducer resonant frequency, so that a further change in oscillator frequency reduces the current level and, accordingly, the value of the voltage 203.  The capacitor C6 is left in a charged state at a level corresponding to the maximum level of signal 203 and is bled off at a time constant determined by the value of the capacitor C6 and of resistor R5.

The comparator 202c is held in an OFF condition until the voltage from the peak detector 202b exceeds the voltage applied to the inverting terminal, when it turns ON and propogates a pulse through the capacitor C7 to the input of logic switch 18.

The logic switch 18 comprises four  2-input COS/MOS/NAND gates 302, 304, 306 and 308.  Gates 304 and 308 are connected to form a flip-flop, while gates 302 and 306 are used as invertors.  The truth table for NAND gates is:

| INPUT | OUTPUT |
|-------|--------|
| 00 | 1 |
| 01 | 1 |
| 10 | 1 |
| 11 | 0 |

The correct initialization of the flip-flop is guaranteed by a two-step process when power is applied to the system.  Owing to the initially uncharged state of capacitor C8 the initial transient state of the gates is:

| 302 | | 304 |
|-----|-----|-----|
| In | Out | Out |
| 0 | 0 | 1 |

| 306 | | 308 |
|-----|-----|-----|
| In | Out | Out |
| 0 | 1 | 1 |

0005377

and the second, and stable, condition is:

| 302 | | 304 |
|---|---|---|
| In | Out | Out |
| 0 | 1 | 1 |

| 306 | | 308 |
|---|---|---|
| In | Out | Out |
| 0 | 1 | 0 |

When the foot switch 112 is closed voltage $V_b$ is applied to the input of gate 306 resulting in logic states of:

| 302 | | 304 |
|---|---|---|
| In | Out | Out |
| 0 | 1 | 0 |

| 306 | | 308 |
|---|---|---|
| In | Out | Out |
| 1 | 0 | 1 |

As described in more detail below, the integrator buffer 24 consequently integrates until a "stop" signal from the processor 22 signifies that the resonant frequency of the transducer has been attained. The "stop" signal causes the flip-flop to shift in a two-step process as shown below, causing the integrator to hold its output level.

| TRANSIENT | | | STABLE | | |
|---|---|---|---|---|---|
| 302 | | 304 | 302 | | 304 |
| In | Out | Out | In | Out | Out |
| 1 | 0 | 1 | 0 | 1 | 1 |
| 306 | | 308 | 306 | | 308 |
| In | Out | Out | In | Out | Out |
| 1 | 0 | 0 | 1 | 0 | 0 |

The integrator buffer 24 comprises an integrator amplifier 408 which integrates the signal 310 from the logic switch 18. The charging current of integrator capacitor C10 is proportional to the current flowing in input resistor R11. The output voltage 410 from the integrator 408 is proportional to the voltage across the capacitor C10. Resistors R12 and R15 form a voltage divider which produces a reference starting voltage at one input of the integrator 408. Buffer amplifier 412 is coupled to the output of the integrator 408 as a voltage follower to isolate the input signal to oscillator 20 from the discharge current of capacitor C10. Resistors R13 and R14 form a voltage null network which cancels input offset voltages caused by the logic switch 18. During the system cycle the capacitor C10 will therefore not charge or discharge after the integration period. Release of the footswitch 112 at the end of the cycle deactivates the relay 16, to discharge the capacitor C10 through normally closed contact 414.

In operation, the application of an AC line voltage to the system of Figure 1 produces a DC voltage VA at the driving coil 12. The Darlington pair Q1 of the output amplifier 14 does not conduct however because the oscillator signal is not applied to the base of the Darlington pair Q1 until footswitch 112, associated with the power supply 10, is closed.

Prior to the closing of the footswitch, DC voltage VD is applied to the processor 22 and the integrator buffer 24, and through the voltage divider network of R15 and R12, to the logic switch 18.

The output of the logic switch 18 is at the same potential as its supply voltage, which is derived from the voltage divider network of resistors R15 and R12. The potential across the input of the integrator amplifier 408 is therefore zero and no charging current is applied to the capacitor C10. The switch 414, shunting the integrator capacitor C10, is a normally closed contact of a relay 16 coupled between the footswitch 112 and a reference potential such as earth. Accordingly, capacitor C10 is shunted by switch 414 until the closing of the footswitch 112.

The closing of the footswitch 112 applies a voltage to a water solenoid 110 and a voltage regulator 106 of the power supply 10. The output from the voltage regulator 106 is applied across a diode D2 of the oscillator 20, which in turn applies alternating input current to the base of the Darlington pair Q1. At the same time, a relay 16 is energised, opening the switch 414 in the integrator buffer 24 and removing the shunt from the capacitor C10. The logic switch 18 switches the state of the flip-flop combination 304, 308 causing signal 310 to go LOW and thereby inducing a current through the resistor R11 to cause the capacitor C10 to charge upward at a substantially linear rate.

The charging potential of the capacitor C10 is coupled through the buffer amplifier 412 to form the control signal for the oscillator 20. The control signal increases linearly and causes the oscillator 20 to shift frequency at the charge rate of the capacitor C10. The peak detector 202b of the processor 22 senses the amplifier signal from sensing resistor R23. As the oscillator is swept past the resonant frequency of the transducer assembly, the sensed signal level starts to decrease. The maximum signal stored in the capacitor C6 is compared to the now-decreasing sensed signal 203 by the comparator 202c and the comparator is caused to change state. The output state of the comparator is transformed into a pulse by the combination of capacitor C7 and resistor R7, and the pulse changes the logic state of NAND gate 302, thereby changing the output of signal 310 of the NAND gate 304 to a HI state. The HI state stops the current flow into the input of the integrating amplifier 408, thereby maintaining the output voltage of the integrating amplifier 408 (and the control voltage 416 of the oscillator), at a level which maintains the oscillator frequency at the resonant frequency. The cycle is repeated every time the footswitch is energised, keeping the oscillator frequency at essentially
the resonant frequency of the transducer assembly.

0005377

CLAIMS:

1.       A dental handpiece comprising a transducer assembly for holding a work tool, a variable frequency oscillator (20) operable to generate an electrical signal to cause said tool to vibrate, and oscillator control means (24) for controlling the frequency of the tool, characterised in that the oscillator control means (24) is arranged to sweep said oscillator (20) through a spectrum of frequencies, and there is provided means (22) for detecting a maximum in the current flow in the transducer assembly as said oscillator (20) sweeps, to generate a latch signal to stop said oscillator (20) at substantially the frequency producing the detected maximum current flow through said transducer assembly, which frequency is substantially a resonant frequency of the assembly.

2.       A circuit for driving a transducer assembly at substantially a resonant frequency of the assembly, said circuit comprising a variable frequency oscillator (20) tne frequency of which is controlled by oscillator control means (24), characterised in that the oscillator control means (24) is arranged to sweep the oscillator (20) through a spectrum of frequencies, and there is provided means (22) for detecting a maximum in the current flow in the transducer assembly as said oscillator (20) sweeps, to generate a latch signal to stop said oscillator (20) at substantially the frequency producing the detected maximum current flow through said transducer assembly, which frequency is substantially a resonant frequency of the assembly.

3.       A dental handpiece according to claim 1 or a circuit according to claim 2 characterised in that said maximum detecting means (22) comprises means (202b and C6) for storing a signal representative of the largest detected

0005377

value of the current flow through said transducer assembly, and means (202c) for comparing a signal representative of the instantaneous value of the current flow with the stored largest value  signal to generate said latch signal when the instantaneous value becomes less than the stored largest value.

4.      A dental handpiece or a circuit according to claim 3 characterised in that the storing means comprises an amplifier (202b) and a capacitor (C6), said amplifier having an inverting and a non-inverting input, one of which inputs is coupled to receive a signal representative of the instantaneous value of the current flow through the transducer assembly, the capacitor being connected between the other input and a reference potential, and there is provided a unidirectional flow device (D3) connected between said other input and the output of the amplifier so that when the stored value of the current flow through the transducer assembly does not exceed the instantaneous value of the current flow through the transducer assembly, the unidirectional flow device (D3) provides a charging path for the capacitor (C6).

5.      A dental handpiece or a circuit according to claim 3 or claim 4 characterised in that the comparing means comprises a bistable amplifier (202c) having an inverting and a non-inverting input, one of which inputs is coupled to receive a signal representative of the instantaneous value of the current flow through the transducer assembly, the other input of which is coupled to the storing means so as to receive a signal represent- ative of the stored value of the current flow through the transducer assembly, and wherein the output of the bistable amplifier is coupled to control the oscillator control means (24).

6.      A dental handpiece according to any one of claims 1 and 3 to 5 or a circuit according to any one of claims 2 to 5 characterised in that the oscillator control means (24) comprises an amplifier (408) connected as an integrator so as to generate an oscillator control signal having an amplitude which varies proportionally with time causing said oscillator (20) to sweep, said integrator being responsive to said latch signal to stop integrating so as to hold the oscillator substantially at said resonant frequency.

7.      A dental handpiece according to any one of claims 1 and 3 to 6, or a circuit according to any one of claims 2 to 6 characterised in that there is provided a latch circuit (18) for generating said latch signal, said latch circuit being arranged to isolate said oscillator (20) from said maximum detecting means (22) after said latch signal has been generated.

8.      A dental handpiece or a circuit according to claim 7 characterised in that operation starting and stoping means are provided for resetting said latch circuit (18) and said oscillator control means (24) so that at the start of each operation said oscillator control means is operable to recommence sweeping said oscillator through the spectrum of frequencies.

Fig_1

Fig_2

# EUROPEAN SEARCH REPORT

European Patent Office

0005377

Application number

EP 79 300 787.3

## DOCUMENTS CONSIDERED TO BE RELEVANT

| Category | Citation of document with indication, where appropriate, of relevant passages | Relevant to claim |
|---|---|---|
| | DE - B - 2 459 841 (LITTON INDUSTRIES) <br> * fig. 3 and 4, column 6, line 38 and the following * <br> -- | 1 |
| | US - A - 3 434 074 (ROSS C. LIBBY) <br> * fig. 1 * <br> -- | 2 |
| | DE - A - 2 302 166 (BROWN, BOVERIE & CIE) <br> * fig. 4 * <br> -- | 3 |
| P | DE - A - 2 710 049 (MEDTRONIC) <br> * the document as a whole * <br> -- | |
| A | DE - A - 2 559 199 (LITTON INDUSTRIES) <br> * the document as a whole * <br> -- | |
| A | DE - B - 2 219 761 (SIEMENS) <br> * the document as a whole * <br> -- | |
| D | US - A - 3 629 726 (G. POPESCU) <br> * the document as a whole * <br> ---- | |

### CLASSIFICATION OF THE APPLICATION (Int. Cl.²)

A 61 C     1/07
H 03 B     3/04

### TECHNICAL FIELDS SEARCHED (Int.Cl.²)

A 61 C     1/00
B 06 B     1/00
H 03 B     3/00
H 03 B     5/00
H 04 B     1/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 18-07-1979 | BREUSING |

EPO Form 1503.1   06.78